# EUROPEAN PATENT APPLICATION

(11) **EP 1 859 895 A1**
(43) Date of publication of application: **28.11.2007**
(21) Application number: 06405228.5
(22) Date of filing: 24.05.2006
(51) Int. Cl.: B23K 26/42, B23K 26/04, G01N 21/958

(54) **Method and device for detecting contaminant on condenser lens in laser processing machine**

(71) Applicant: YAMAZAKI MAZAK CORPORATION, Niwa-gun, Aichi (JP)
(72) Inventor: Yamazaki, Tsunehiko, Yamazaki Mazak Corporation, Niwa-gun Aichi pref. (JP); Miyakawa, Naoomi, Yamazaki Mazak Corporation, Niwa-gun Aichi pref. (JP)
(74) Representative: Moinas, Michel

(57) **Abstract**

A technology is provided in which a contaminant on a condenser lens (100) in a laser processing machine (1) is detected by detecting a change in focal lengths of the lens. A laser beam (LB) emitted from a laser resonator (10) is condensed by a condenser lens (100) in a processing head (50) to be irradiated from a nozzle (60) toward a test piece (TP). A control device of the laser processing machine controls the moving of the processing head (50) in the Z axis direction and records the Z coordinate of the head. When a focal point falls on a surface of the test piece, a blue flame (BF) is generated. A light receiving device (300) receives the blue flame and sends a signal to the control device. In a contaminated condenser lens, a heat is accumulated, which expands the lens and reduces the focal length of the lens.

## Description

### BACKGROUND OF THE INVENTION

### Field of the Invention

The present invention relates to an automatic device for detecting a contaminant on a condenser lens equipped in a torch of a laser processing machine.

### Description of the Related Art

In a laser processing machine, a laser beam is emitted from a laser emitter to be supplied via an optical system having a turning mirror to a processing torch which includes a condenser lens where the laser beam is condensed on a position close to a surface of a work to perform a processing.

Any contaminants such as extraneous materials adhering to the optical system or the condenser lens lower the efficiency of the processing.

Japanese Patent Laid-Open Publication No. 9-271968 (Patent Document 1) discloses a technology for detecting a contaminant on an optical system, and Japanese Patent Laid-Open Publication No. 9-57479 (Patent Document 2) discloses a laser processing head which monitors a contaminant on a condenser lens in a torch.

The laser processing head described in the above patent document 2 optically detects a contaminant on a condenser lens by providing imaging means to a laser processing head.

However, the means makes the configuration of the processing head complicated and requires another processing of the imaged data.

The present invention provides a method and device for detecting a contaminant on a condenser lens by using controlling means in a vertical axis (Z axis) of a processing head which is provided to a laser processing machine.

### SUMMARY OF THE INVENTION

A method for detecting a contaminant on a condenser lens in a laser processing machine according to the present invention basically comprising: a processing head having a condenser lens which condenses a laser beam emitted from a laser resonator; and a light sensor for detecting an intense light which is generated when a focal point of the condensed laser beam falls on a surface of a work, wherein a change in focal points of the condenser lens is detected to detect the contaminant on the condenser lens.

A device for detecting a contaminant on a condenser lens in a laser processing machine, comprising: a table which supports a work; a processing head moving in the Z axis direction which is a coordinate axis vertical to the table; a control device to control the moving of the processing head and record a coordinate position in the Z axis of the processing head; a condenser lens provided in the processing head to condense a laser beam emitted from a laser resonator; and a light receiving device to detect an intense light which is generated when the focal point of the laser beam condensed by the condenser lens falls on a surface of a work and sends a signal to the control device, wherein the control device compares a Z coordinate of a focal point of a normal condenser lens in the processing head to a Z coordinate of a focal point of a contaminated condenser lens in order to detect a contaminant on the condenser lens.

According to the present invention, as a contaminated condenser lens in a laser processing machine thermally expands and its focal length is reduced, the contaminant on the condenser lens can be detected by simple means.

### BRIEF DESCRIPTION OF THE DRAWINGS

FIG. 1 is a view to illustrate a device for detecting a contaminant on a condenser lens in a laser processing machine;
FIG. 2A is a view to illustrate a method for detecting a contaminant on a condenser lens; and
FIG. 2B is a view to illustrate a method for detecting a contaminant on a condenser lens.

### DETAILED DESCRIPTION OF THE PREFERRED EMBODIMENTS

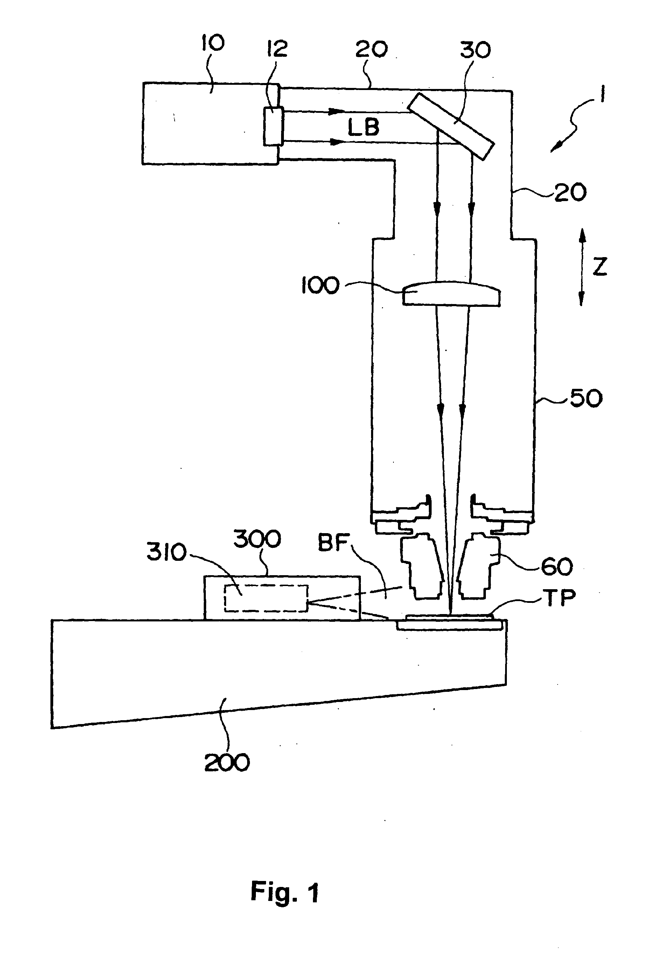

FIG. 1 is a view to generally illustrate a device for detecting a contaminant on a condenser lens in a laser processing machine according to the present invention.

A device for detecting a contaminant on a condenser lens which is generally denoted by reference numeral 1 comprises a light receiving device 300 mounted on a part of a base 200 in a laser processing machine. The light receiving device 300 has a light sensor 310 to detect an intense light which is called a blue flame BF, the intense light being generated when the focal point of the condensed laser beam falls on a surface of a test piece TP.

A laser resonator 10 in the laser processing machine outputs a laser beam LB through an output lens 12 to a light path 20. A turning mirror 30 or the like is arranged in the light path 20 to introduce the laser beam LB into a processing head 50.

The processing head 50 is controlled to move relative to the fixed light path 20 in the Z axis direction which is vertical to a processing table

In the processing head 50, a condenser lens 100 is mounted, and the condenser lens 100 condenses the laser beam LB which is entered therein as parallel light rays to irradiate from a nozzle 60 toward a test piece TP. When the focal point of the laser beam falls on a surface of the test piece TP by moving the processing head 50 in the Z axis direction, a blue flame BF is generated.

The light sensor 310 of the light receiving device 300 detects the generation of the blue flame BF and sends a notification to a control device (not shown) of the laser processing machine. The control device records the Z coordinate at which the blue flame BF is generated.

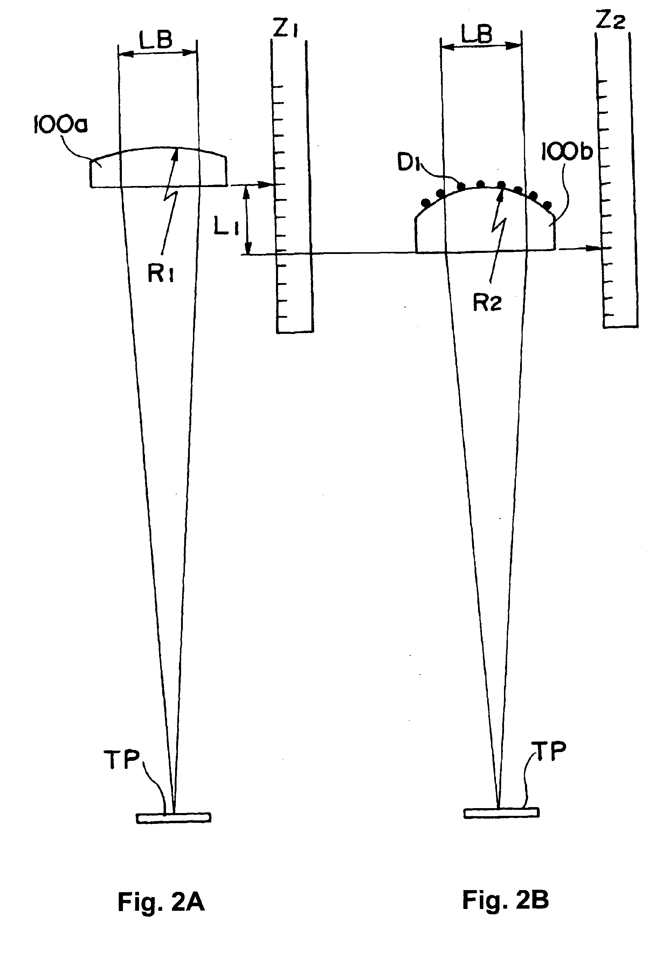

FIGS. 2A and 2B are views to illustrate a method for detecting a contaminant on a condenser lens according to the present invention. FIG. 2A shows a focal point of a laser beam LB with a new condenser lens 100a being mounted. In this state, the upper surface of the lens 100a has a radius of curvature R₁. And the Z axis coordinate at which a blue flame is generated on the test piece TP corresponds to Z₁, which will be recorded by the control device.

After the use of a processing head for a long time of period, extraneous materials adhere to an upper surface of a condenser lens. FIG. 2B shows this state.

When the extraneous materials D₁ adhere to the condenser lens, thereby makes the lens contaminated, the light transmittance of the lens 100b is reduced. The reduced light transmittance of the lens 100b reduces the cutting energy of the laser beam, which in turn reduces the efficiency of the processing.

In the contaminated condenser lens 100b, the light energy which was not transmitted through is converted to heat which will be accumulated in the lens.

The accumulated heat expands the condenser lens 100b, so that the upper surface of the lens 100b is deformed into a convex shape and the condenser lens 100a has another radius of curvature R₂ which is smaller than the radius of curvature R₁.

In this state, the focal point of the condenser lens 100b is reduced. As a result, at the Z axis coordinate Z₂ of the processing head, the focal point of the condenser lens 100b falls on the surface of the test piece TP and a blue flame is generated.

When the difference L₁ between the Z axis coordinates reaches a predetermined value, the control device determines that the lens got a predetermined amount of contamination, and performs operations such as an indication of alarm and the like.

Then the laser processing machine requires a procedure for automatically exchanging the current torch into a new torch or a procedure for cleaning the lens.

The process for detecting a contaminant on a lens may be performed at a time before a processing after actuation of the laser processing machine or at every time of a predetermined number of processings, which may be set as a parameter in a CNC of the control device.

## Claims

1. A method for detecting a contaminant on a condenser lens (100, 100a, 100b), in a laser processing machine, comprising: a processing head (50) having a condenser lens (100, 100a, 100b) which condenses a laser beam (LB) emitted from a laser resonator (10); and a light sensor (310) for detecting an intense light (BF) which is generated when a focal point of the condensed laser beam falls on a surface of a work (TP), wherein the contaminant on the condenser lens (100, 100b) is detected by detecting a change in focal points of the condenser lens.

2. A device (1) for detecting a contaminant on a condenser lens (100, 100b), in a laser processing machine comprising: a table (200) which supports a work; a processing head (50) moving in the Z axis direction which is a coordinate axis vertical to the table (200); a control device to control the moving of the processing head (50) and record a coordinate position in the Z axis of the processing head (50); a condenser lens (100, 100a, 100b) provided in the processing head (50) to condense a laser beam (LB) emitted from a laser resonator (10); and a light receiving device (300) to detect an intense light (BF) which is generated when a focal point of the laser beam (LB) condensed by the condenser lens falls on a surface of a work (TP) and send a signal to the control device, wherein the control device compares a Z coordinate of a focal point of a normal condenser lens in the processing head to a Z coordinate of a focal point of a contaminated condenser lens (100, 100b) in order to detect a contaminant on the condenser lens.
